# EUROPEAN PATENT APPLICATION

(11) **EP 2 334 068 A1**
(43) Date of publication of application: **15.06.2011**
(21) Application number: 09815623.5
(22) Date of filing: 25.09.2009
(51) Int. Cl.: H04N 7/15

(54) **VIDEO AND AUDIO PROCESSING METHOD, MULTI-POINT CONTROL UNIT AND VIDEO CONFERENCE SYSTEM**

(30) Priority: 28.09.2008 CN 200810223810
(71) Applicant: Huawei Device Co., Ltd., Shenzhen, Guangdong 518129 (CN)
(72) Inventor: WANG, Xiangjiong, Shenzhen Guangdong 518129 (CN); LONG, Yanbo, Shenzhen Guangdong 518129 (CN)
(74) Representative: Charles, Glyndwr
(86) International application number: PCT/CN2009/074228
(87) International publication number: WO 2010/034254

(57) **Abstract**

The present invention discloses a video processing method, an audio processing method, a video processing apparatus, an audio processing apparatus, a Multipoint Control Unit (MCU), and a videoconference system. The video processing method includes: obtaining N video streams sent by a first conference terminal on N channels; determining a second conference terminal that interacts with the first conference terminal, where the second conference terminal supports L video streams, and L is different from N; adding N-channel video information carried in the N video streams to L video streams; and transmitting the L video streams to the second conference terminal. The embodiments of the present invention implement interoperability between the sites that support different numbers of media streams, for example, telepresence sites, dual-stream sites, and single-stream sites, thus reducing the construction cost of the entire network.

## Description

### Field of the Invention

The present invention relates to audio and video technologies, and in particular, to a video processing method, an audio processing method, a video processing apparatus, an audio processing apparatus, a Multipoint Control Unit (MCU), and a videoconference system.

### Background of the Invention

In an early videoconference system, the participants in each site can send only one video stream, which is generally the conference room scene collected by a camera, with a view to providing a face-to-face communication effect for the participants. With the development of the videoconference technologies, dual-stream standards come forth, allowing participants to send two streams, namely, a video stream and H.239 content. The video stream is the conference room scene collected by a camera, and the H.239 content is the PowerPoint slides sent from a notebook computer, thus improving data sharing between participants. Later, a telepresence system comes forth. The telepresence system transmits images of multiple cameras simultaneously, and the images of multiple cameras can be stitched together to form a wider complete conference room scene, thus providing the on-the-spot experience of video communications.

Although the dual-stream and multi-stream conference modes bring great convenience and a better experience to users, all sites of a conference need to support the dual-stream mode or multi-stream mode simultaneously, and are not compatible with the existing single-stream mode. If a user on a single-stream site wants to participate in a dual-stream or multi-stream conference, the single-stream device needs to be replaced with a dual-stream or multi-stream device which is more costly. Therefore, a solution is needed to support hybrid networking of single-stream sites, dual-stream sites and multi-stream sites to reduce the overall construction cost.A solution in the conventional art supports hybrid conferences of a single-stream site and a dual-stream site, and forwards the video stream of the dual-stream site to the single-stream site, but discards the H.239 content of the dual-stream site.

In the process of implementing the present invention, the inventor finds at least the following problems in the conventional art: In the hybrid networking of a dual-stream site and a single-stream site in the conventional art, because the H.239 content of the dual-stream site is discarded, the user on the single-stream site can see only the video images sent from the dual-stream site, but see no H.239 content, which deteriorates the conference effect. Moreover, the conventional art does not support the hybrid networking of the telepresence sites with single-stream sites, dual-stream sites, and telepresence sites that support different numbers of streams.

### Summary of the Invention

The embodiments of the present invention provide a video processing method, an audio processing method, a video processing apparatus, an audio processing apparatus, an MCU, and a videoconference system to support hybrid networking of different audio and video sites.

A video processing method provided in an embodiment of the present invention includes:
obtaining N video streams sent by a first conference terminal on N channels, where each first conference terminal supports N video streams;
determining a second conference terminal that interacts with the first conference terminal, where the second conference terminal supports L video streams, and L is different from N;
adding N-channel video information carried in the N video streams to L video streams; and
transmitting the L video streams to the second conference terminal.

An audio processing method provided in an embodiment of the present invention includes:
obtaining audio streams of various conference terminals, where the conference terminals include at least a terminal of a telepresence site and a terminal that supports a different number of audio streams from the telepresence site;
mixing the audio streams of the conference terminals; and
sending the mixed audio streams to the conference terminals.

A video processing apparatus provided in an embodiment of the present invention includes:
a video obtaining module, configured to obtain N video streams sent by a first conference terminal on N channels, where each first conference terminal supports N video streams;
a determining module, configured to determine a second conference terminal that interacts with the first conference terminal, where the second conference terminal supports L video streams, and L is different from N;
a processing module, configured to add N-channel video information carried in the N video streams to L video streams; and
a transmitting module, configured to transmit the L video streams to the second conference terminal.

An audio processing apparatus provided in an embodiment of the present invention includes:
an audio obtaining module, configured to obtain audio streams of various conference terminals, where the conference terminals include at least a terminal of a telepresence site and a terminal that supports a different number of audio streams from the telepresence site;
a mixing module, configured to mix the audio streams of the conference terminals; and
a sending module, configured to send the mixed audio streams to the conference terminals.

An MCU provided in an embodiment of the present invention includes:
a first accessing module, configured to access a first conference terminal to receive first media streams from the first conference terminal, where the first media streams include N video streams and N audio streams;
a second accessing module, configured to access a second conference terminal to receive second media streams from the second conference terminal, where the second media streams include L video streams and L audio streams, and L is different from N; and
a media switching module, configured to transmit all information in the first media streams to the second conference terminal, and transmit all information in the second media streams to the first conference terminal.

A videoconference system provided in an embodiment of the present invention includes:
at least two conference terminals, which support at least two different numbers of media streams; and
an MCU, configured to switch all information carried in the media streams of the at least two conference terminals.

In the embodiments of the present invention, the received audio and video streams are processed so that the number of the audio or video streams is the same as the number of streams supported by the receiving site, and that the sites with different numbers of audio or video streams are interoperable. That is, the telepresence site, the single-stream site, and the dual-stream site are interoperable, and the sites with different numbers of media streams can be networked together to reduce the construction cost of the entire network.

### Brief Description of the Drawings

To describe the technical solution under the present invention more clearly, the following outlines the accompanying drawings involved in the embodiments of the present invention. Apparently, the accompanying drawings outlined below are not exhaustive, and persons of ordinary skill in the art can derive other drawings from such accompanying drawings without any creative effort.
FIG. 1 shows a structure of a videoconference system provided in an embodiment of the present invention;
FIG. 2 is a flowchart of a video processing method provided in a first embodiment of the present invention;
FIG. 3 shows a structure of an MCU provided in a second embodiment of the present invention;
FIG. 4 is a flowchart of a video processing method provided in the second embodiment of the present invention;
FIG. 5 is another flowchart of the video processing method provided in the second embodiment of the present invention;
FIG. 6 shows a structure of an MCU provided in a third embodiment of the present invention;
FIG. 7 shows a structure of an MCU provided in a fourth embodiment of the present invention;
FIG. 8 is a flowchart of an audio processing method provided in the fourth embodiment of the present invention;
FIG. 9 shows a structure of a video processing apparatus in an embodiment of the present invention; and
FIG. 10 shows a structure of an audio processing apparatus in an embodiment of the present invention.

### Detailed Description of the Embodiments

The technical solution under the present invention is hereinafter described in detail with reference to embodiments and accompanying drawings. Evidently, the embodiments herein are merely representative of particular embodiments of the present invention, and shall be regarded as illustrative in nature and not exhaustive or restrictive. All other embodiments, which can be derived by those skilled in the art from the embodiments given herein without any creative efforts, fall within the scope of the present invention.

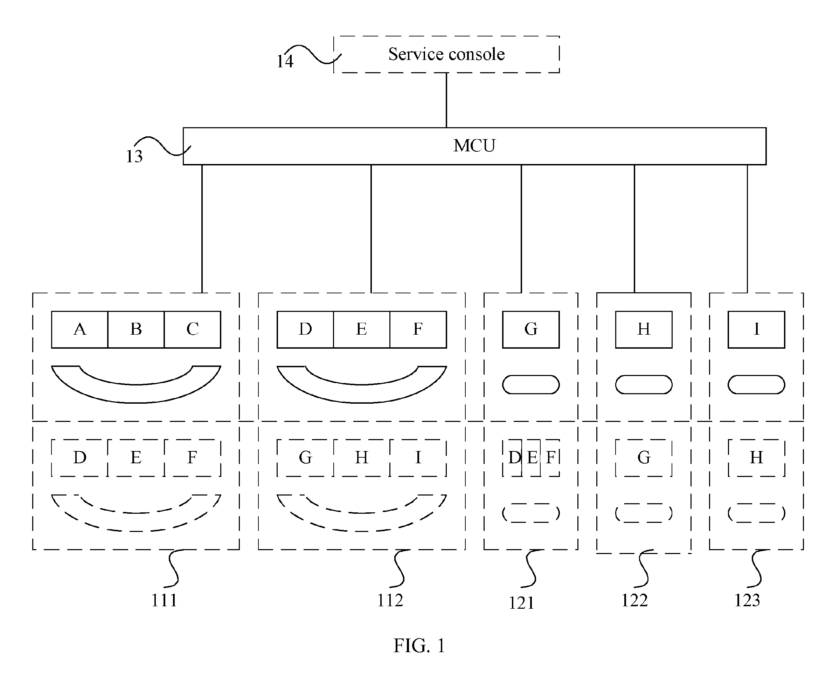

FIG. 1 shows a structure of a videoconference system provided in an embodiment of the present invention. The videoconference system includes a first conference terminal, a second conference terminal which supports a different number of media streams, and an MCU 13 for exchanging media streams between the first conference terminal and the second conference terminal. At least one first conference terminal and at least one second conference terminal exist. The first conference terminals shown in FIG. 1 are a first telepresence site 111 which transmits three media streams (namely, A, B, and C), and a second telepresence site 112 which transmits three media streams (namely, D, E, and F). The second conference terminals are a first single-stream site 121, a second single-stream site 122, and a third single-stream site 123, which transmit media streams on channel G, channel H, and channel I respectively. The MCU 13 is responsible for core switching, audio mixing, and screen splitting between the sites (such as the single-stream site, dual-stream site, and multi-stream site). The first telepresence site 111, the second telepresence site 112, the first single-stream site 121, the second single-stream site 122, and the third single-stream site 123 access the MCU 13 through a transmission network such as an E1 network, or an IP network, or an Integrated Services Digital Network (ISDN). The media streams (including video streams and audio streams) converge on the MCU 13. The MCU 13 controls and switches the media streams received on all sites uniformly to implement switching of media streams between the sites.

As shown in FIG. 1, the second telepresence site 112 can receive media information (G, H, I) from the first single-stream site 121, the second single-stream site 122, and the third single-stream site 123; and the first single-stream site 121 can receive media information (D, E, F) from the second telepresence site 112. Therefore, interactions are implemented between the telepresence site and the single-stream site, and a site transmitting a specific number of media streams is interoperable with a site transmitting a different number of media streams. Similarly to the conventional art, interactions are also enabled between different telepresence sites, and between different single-stream sites. For example, the first telepresence site 111 can receive media information from the second telepresence site 112; the second single-stream site 122 can receive media information from the first single-stream site 111; and the third single-stream site 123 can receive media information from the second single-stream site 122. Therefore, the technical solution is compatible with the conventional art.

This embodiment may further include a service console 14, which is configured to predefine various parameters of the system, and transmit the predefined parameters to the MCU 13 so that the MCU 13 exercises uniform control according to the predefined parameters. The structure and the implementation mode of the MCU will be detailed in the following embodiments.

In this embodiment, the MCU performs interactions between sites which transmit different numbers of media streams, and the sites which transmit different numbers of media streams can be networked together. The corresponding telepresence site terminal, single-stream site terminal, and dual-stream site terminal can be configured according to the conditions of each user in the network, without configuring high-performance devices throughout the network. Therefore, the construction cost of the entire network is reduced, and the waste of device resources is avoided.

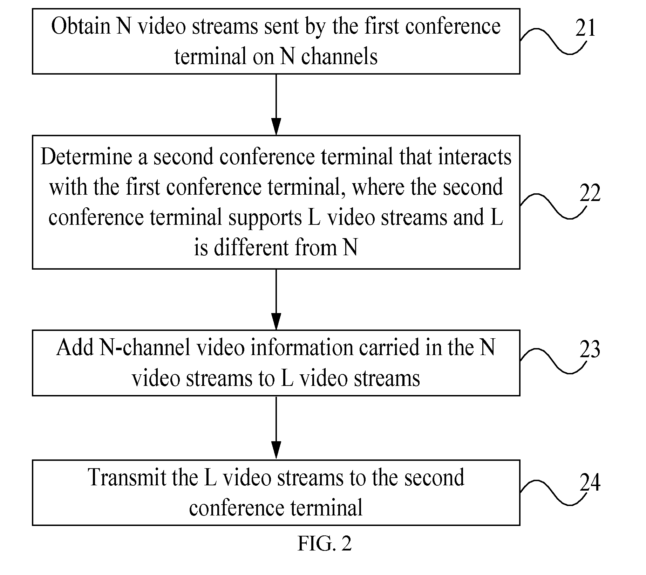

FIG. 2 is a flowchart of a video processing method provided in the first embodiment of the present invention. The method includes the following steps:

Step 21: The MCU obtains N video streams sent by the first conference terminal on N channels. For example, the MCU receives three video streams from the telepresence site.

Step 22: The MCU determines a second conference terminal that interacts with the first conference terminal, where the second conference terminal supports L video streams, and L is different from N. For example, the second conference terminal is a single-stream site, and supports one video stream.

Step 23: The MCU adds N-channel video information carried in the N video streams to L video streams. As shown in FIG. 1, the first single-stream site 121 supports one video stream, but the second telepresence site 112 accessed by the MCU supports three video streams. Therefore, the MCU needs to process the three video streams so that the information in the three video streams is added to one video stream. For example, the video stream includes information D, E, and F. A videoconference system in the conventional art requires that all sites support the same number of media streams. In this embodiment, however, the sites which transmit different numbers of media streams are interoperable. A dual-stream site in the conventional art transmits only the video streams to the single-stream site but loses the H.239 content. In this embodiment, however, the second media streams obtained after processing reserve all information in the first media streams, thus avoiding information loss. In the foregoing embodiment, the three-channel video information on the telepresence site is synthesized. A different processing mode is: The three-channel video information is sent as one video stream to the single-stream site on a time-sharing basis, which will be detailed in the following embodiment.

Step 24: The MCU transmits the L video streams to the second conference terminal. For example, the MCU sends a video stream that carries the three-channel video information to the single-stream site.

This embodiment processes the video streams from various sites so that the number of the received video streams is different from the number of the output video streams, thus accomplishing interoperability between the sites that transmit different numbers of media streams. Moreover, the output video streams reserve all information in the input video streams, thus avoiding information loss.

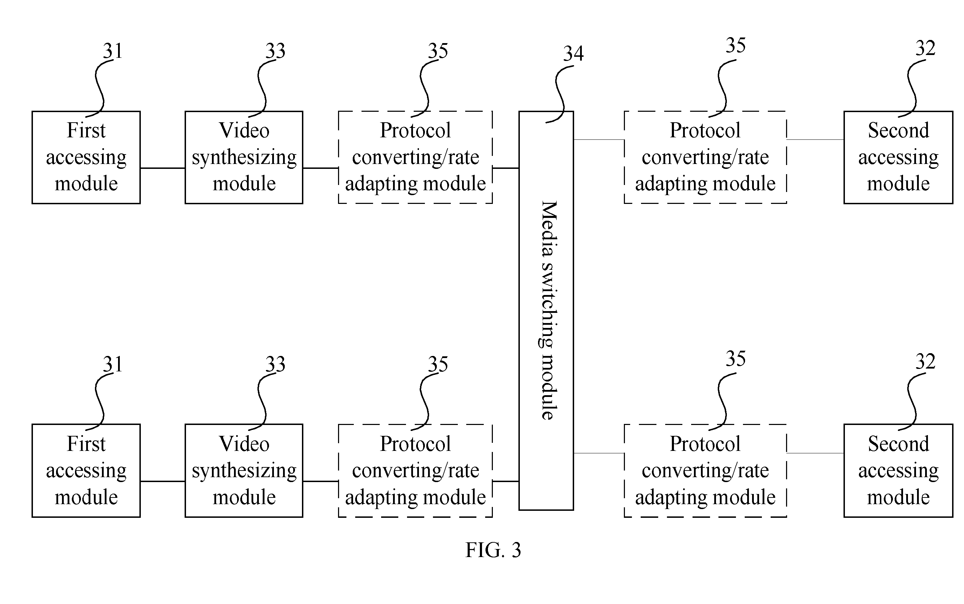

FIG. 3 shows a structure of an MCU provided in the second embodiment of the present invention. This embodiment is specific to the video part of the MCU. The MCU includes a first accessing module 31, a second accessing module 32, a video synthesizing module 33, and a media switching module 34. The first accessing module 31 is connected with the first conference terminal, and is configured to receive N video streams of the first conference terminal. For example, the first accessing module receives three video streams from the telepresence site shown in FIG. 1. The second accessing module 32 is connected with the second conference terminal, and is configured to receive L video streams of the second conference terminal, where L is different from N. For example, the second accessing module receives one video stream from the single-stream site shown in FIG. 1. The video synthesizing module 33 is connected with the first accessing module 31, and is configured to synthesize N video streams into L video streams. For example, the video synthesizing module synthesizes three video streams of the telepresence site shown in FIG. 1 into one video stream. The media switching module 34 is connected with the video synthesizing module 33, and is configured to forward the L video streams synthesized from the N video streams to the second conference terminal. For example, the media switching module sends the one video stream synthesized from three video streams shown in FIG. 1 to the single-stream site. Further, the video synthesizing module 33 is configured to forward the received but non-synthesized N video streams to the media switching module 34 directly, which transmits the video streams to the corresponding multi-stream sites. For example, the second telepresence site 112 in FIG. 1 forwards multiple video streams to the first telepresence site 111 directly through the media switching module 34.

The video synthesizing module is configured to synthesize several pieces of N-channel video information into L-channel video information, for example, synthesize L pieces of N-channel video information into L-channel video information, each piece of N-channel video information being synthesized into one-channel video information; or configured to synthesize one piece of N-channel video information into L-channel video information, for example, keep (L-1)-channel video information in the N-channel video information unchanged, and synthesize [N-(L-1)]-channel video information into one-channel video information. This embodiment may further include protocol converting/rate adapting modules 35. The protocol converting/rate adapting modules 35 are located between the video synthesizing module and the media switching module, and between the second accessing module and the media switching module respectively, and are configured to perform protocol conversion and rate adaptation, namely, convert the source video format into the target video format, or convert the source video bandwidth into the target video bandwidth. If no protocol conversion or rate adaption is required between the sites, such modules are not required. Further, this embodiment may further include a conference control module. The conference control module is connected with all modules in the MCU, and is configured to manage and control modules such as the accessing module, video synthesizing module, protocol converting/rate adapting module, and media switching module in the MCU to interoperate according to various parameters input by the service console 14, and enable the user to manage the conference. For example, the conference control module controls the accessing module to send the received video streams to the protocol converting/rate adapting module, or to send them to the video synthesizing module directly; the conference control module controls the video synthesizing module to synthesize video streams or forward the video streams directly; the conference control module controls the media switching module to send the processed video streams to which site, and controls the modules to work uniformly.

In this embodiment, a video synthesizing module synthesizes multiple video streams, so that the video streams from multi-stream sites can be transmitted to single-stream or dual-stream sites, without upgrading the sites that support fewer media streams. Therefore, the device cost is saved.

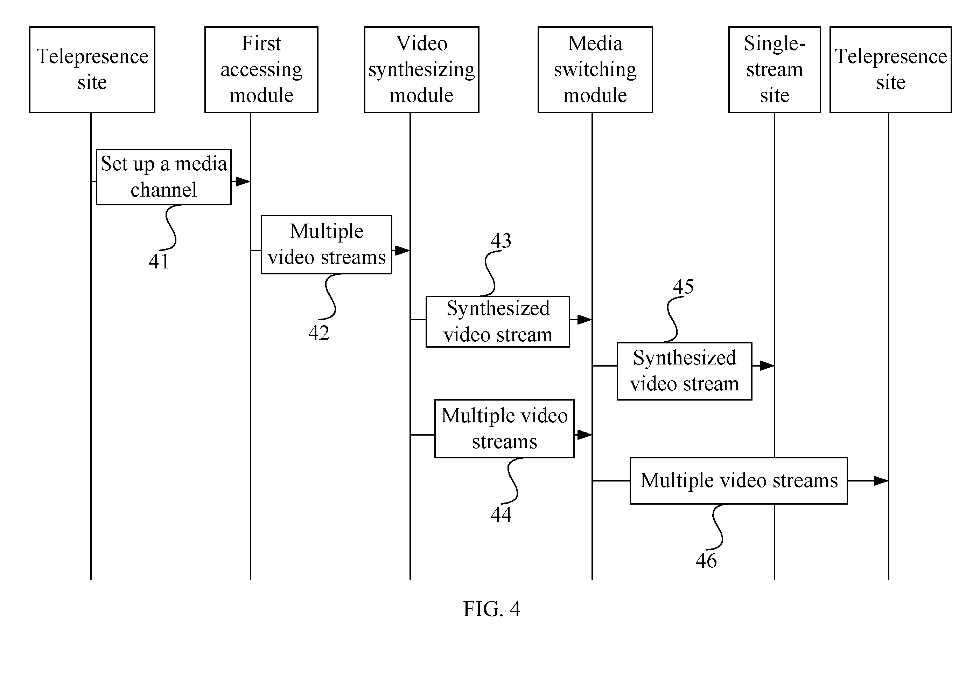

FIG. 4 is a flowchart of a video processing method provided in the second embodiment of the present invention. In this embodiment, the telepresence site is an input side, and the single-stream site and the telepresence site are the output side; and the first accessing module receives multiple video streams input by the telepresence site. This embodiment includes the following steps:

Step 41: Through a standard protocol (H.323, SIP, or H.320) call/capability negotiation process, a media channel is set up between the telepresence site and the first accessing module in the MCU; and the first accessing module in the MCU obtains multiple video streams of the telepresence site.

Step 42: The first accessing module sends multiple video streams to the video synthesizing module. The video synthesizing module performs image decoding for the received multiple video streams, obtains original images, zooms the original images and synthesizes them into a new image. Afterward, the video synthesizing module encodes the new image, and, according to control exercised by the conference control module, knows that the image needs to be transmitted to the single-stream site. Therefore, the video synthesizing module obtains one video stream through encoding, and sends the one video stream of the encoded image to the media switching module. Because multiple video streams are switched between the telepresence sites, the video synthesizing module can not only send the synthesized one video stream to the media switching module, but also forward the multiple video streams received by the accessing module to the media switching module directly for switching between the telepresence sites. Specifically, the conference control module controls the video synthesizing module to synthesize video streams or to forward the video streams directly.

Step 43: The video synthesizing module sends the synthesized video streams to the media switching module. The media switching module forwards the video streams between sites according to instructions of the conference control module.

Step 44: The video synthesizing module forwards multiple video streams to the media switching module directly.

Step 45: The media switching module sends the synthesized video streams to the single-stream site. The video synthesizing module synthesizes multiple video streams into one video stream. After being forwarded by the media switching module, multi-channel video information on the telepresence site can be received by the single-stream site. As shown in FIG. 1, after the synthesis, the first single-stream site 121 can receive the video images that include three-channel video information (D, E, F) from the second telepresence site 112.

Step 46: The media switching module sends multiple video streams to the telepresence site. As shown in FIG. 1, the information on the second telepresence site 112 is transmitted to the first telepresence site 111.

In this embodiment, it is assumed that multiple video streams are converted into one video stream. Based on this stream synthesis principle, N-stream sites can be networked with L-stream sites randomly, supposing that N is greater than L. Specifically, the following two modes are applicable:

Mode 1: Several pieces of N-channel video information is synthesized into L-channel video information, namely, synthesis is performed for several sites that support N streams respectively to obtain L video streams. Specifically, N video streams of the N-stream site are synthesized into one video stream that includes N pictures, and then this video stream is sent to one video channel of the L-stream site. The remaining L-1 video channels of the L-stream site may be used to receive video information from other sites. For example, two 3-stream sites are processed, three video streams of each 3-stream site are synthesized into one video stream, and finally converted into two video streams and sent to the dual-stream site. In this mode, the L-stream site can receive combined pictures of L sites.

Mode 2: One piece of N-channel video information is synthesized into L-channel video information, namely, the streams of one N-stream site are synthesized to obtain L video streams. Specifically, L-1 video streams of an N-stream site are sent to L-1 video channels of the L-stream site respectively, and the remaining N-(L-1) video streams of the N-stream site are synthesized into one video stream that includes N-(L-1) pictures, and this video stream is sent to the remaining one video channel of the L-stream site. For example, one video stream of a 3-stream site remains unchanged, and the other two video streams are synthesized into one. Finally, two video streams are generated and sent to the dual-stream site. Therefore, this mode ensures that the L-stream site receives as many large pictures as possible.

In this embodiment, the video streams of the site that transmits multiple video streams are synthesized, and therefore, the site that transmits fewer video streams can receive the video streams from the site that transmits multiple video streams.

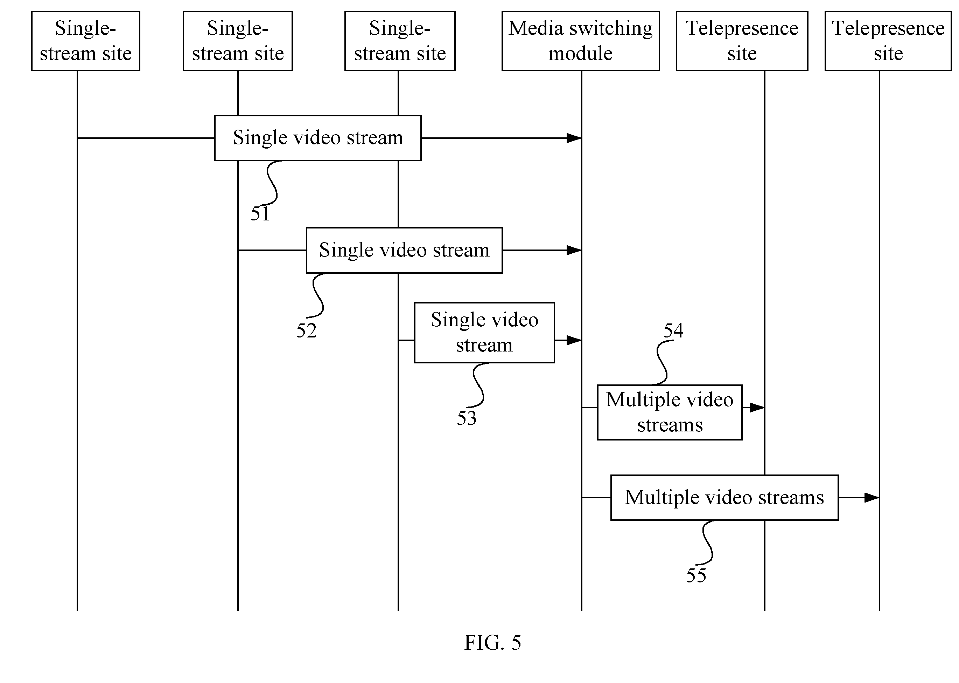

FIG. 5 is another flowchart of the video processing method provided in the second embodiment of the present invention. In this embodiment, it is assumed that the single-stream site is an input side, and that the telepresence site is an output side. The method includes the following steps:

Step 51-53: The single-stream sites send a single video stream to the media switching module through the second accessing module respectively. As shown in FIG. 1, the first single-stream site 121, the second single-stream site 122, and the third single-stream site 123 send respective media streams on channel G, channel H, and channel I to the media switching center.

Step 54: The media switching module combines the single video streams of multiple single-stream sites into multiple video streams. For example, the foregoing three single video streams are combined into three video streams. The combined multiple video streams are sent to a telepresence site.

Step 55: The media switching module forwards the multiple video streams to another telepresence site. As shown in FIG. 1, three video streams (G, H, I) are sent to the second telepresence site 112.

In this embodiment, it is assumed that one video stream is converted into three video streams. Based on this site synthesis principle, any L-stream sites can be networked with N-stream sites, supposing that N is greater than L. The detailed practice is to select N video streams among several L-stream sites and send them to the N-stream site. For example, video streams of two dual-stream sites are combined into four video streams, and output to a telepresence site that supports four streams.

In this embodiment, the video streams of several sites that transmit fewer streams are synthesized, and therefore, the site that transmits multiple streams can receive the video streams from the sites that transmit fewer streams.

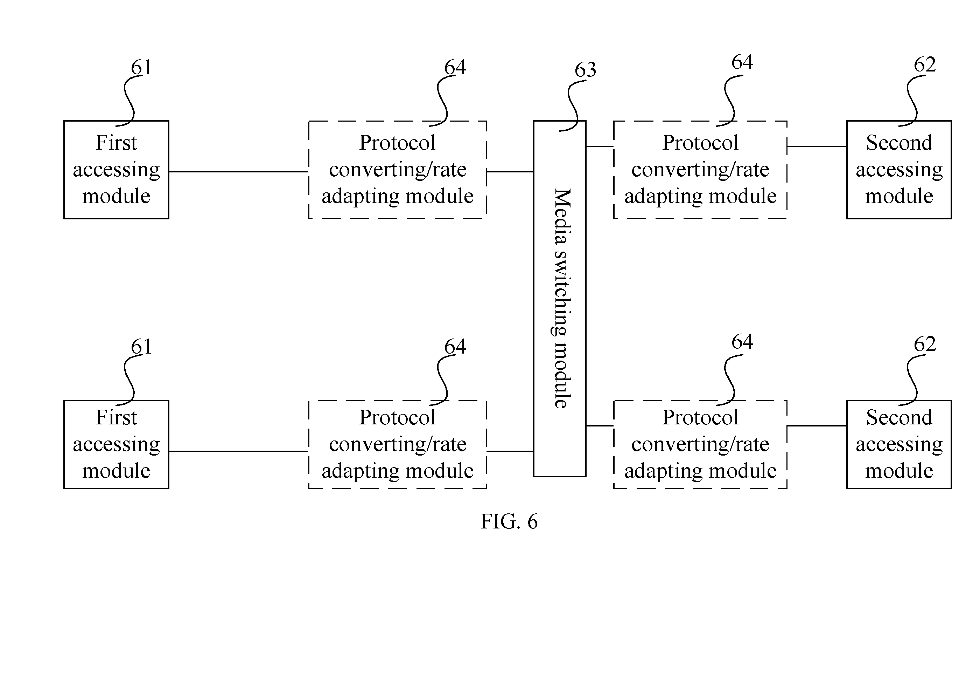

FIG. 6 shows a structure of an MCU provided in the third embodiment of the present invention. This embodiment is specific to the video part of the MCU. The MCU includes a first accessing module 61, a second accessing module 62, and a media switching module 63. The first accessing module 61 is configured to receive N video streams of the first conference terminal. For example, the first accessing module 61 receives video streams of the telepresence site. The second accessing module 62 is configured to receive L video streams of the second conference terminal, where L is different from N. For example, the second accessing module 62 receives video streams of a single-stream site.

In this embodiment, N is greater than L, the first conference terminal is an input side, and the second conference terminal is the output side. Unlike the MCU provided in the second embodiment, the MCU provided in this embodiment includes no video synthesizing unit. The media switching module 63 in this embodiment selects L video streams among N video streams on a time-sharing basis according to preset conditions or video stream conditions, and obtains several time-shared L video streams. Afterward, the media switching module transmits the several L video streams to the second conference terminal on a time-sharing basis. For example, the media switching module selects a video stream inclusive of information D from the second telepresence site 112 in FIG. 1 at a first time point (for example, according to the source address of the video stream); selects a video stream inclusive of information E at a second time point; and selects a video stream inclusive of information F at a third time point; and transmits them to the first single-stream site 121 in FIG. 1. In this way, the first single-stream site 121 sees all the content of the second telepresence site 112 on a time-sharing basis. The details of selecting L video streams among N video streams at a specific time point are as follows:

Mode 1: L video streams are selected among N video streams according to preset control rules, for example, according to the information about the video streams required by the user.

Mode 2: N video streams are arranged in order of priority from high to low, and L video streams are selected according to the preset priority and transmitted to the L-stream site.

Mode 3: The MCU analyzes the audio streams corresponding to the received N video streams, arranges the audio streams in order of volume from high to low, selects the video streams corresponding to the L audio streams and transmits them to the L-stream site.

Mode 4: The N-site adds a priority flag to each video stream. The MCU selects L video streams according to the priority, and transmits them to the L-stream site.

This embodiment may further include a protocol converting/rate adapting module 64 and a conference control module. The functions of the two modules are the same as those in the second embodiment. For example, the protocol converting/rate adapting module 64 is configured to convert protocols and adapt rates; and the conference control module controls all modules.

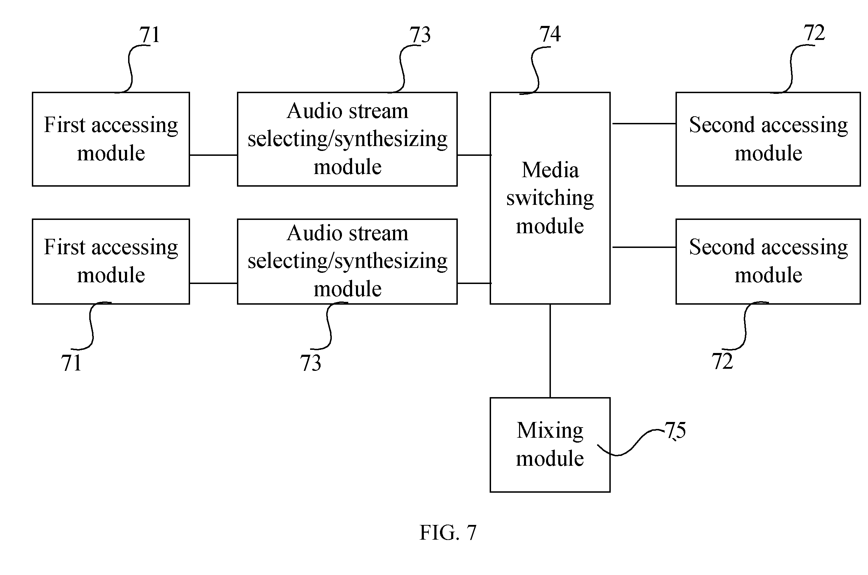

FIG. 7 shows a structure of an MCU provided in the fourth embodiment of the present invention. This embodiment is specific to the audio part of the MCU. The MCU includes a first accessing module 71, a second accessing module 72, an audio stream selecting/synthesizing module 73, a media switching module 74, and a mixing module 75. The first accessing module 71 is configured to receive N audio streams. The second accessing module 72 is configured to receive L audio streams, where L is different from N. The audio stream selecting/synthesizing module 73 is connected with the accessing module which receives other than a single audio stream. For example, if N is not 1 but L is 1, the audio stream selecting/synthesizing module is connected with the first accessing module; if N is not 1 and L is not 1 either, two audio stream selecting/synthesizing modules exist, and are connected with the first accessing module and the second accessing module respectively. The audio stream selecting/synthesizing module is configured to select or synthesize multiple audio streams received by the first accessing module and/or the second accessing module, namely, select the audio streams of higher volume, or synthesize at least two audio streams into one audio stream. The mixing module 75 is configured to mix audio streams of all sites in a centralized way. An audio stream selected or synthesized by the telepresence site and an audio stream sent directly by the single-stream site are input for centralized mixing. The mixing process may be that the audio streams of all sites are decoded, and the voice of several sites is selected according to the volume and synthesized digitally. The synthesized voice data is encoded again, and the encoded streams are sent by the media switching module to all sites. The synthesized voice data can be encoded according to specific protocols or rates of different sites respectively to meet protocol or rate requirements of different sites. The media switching module 74 switches the audio streams after centralized audio mixing of all sites.

This embodiment may further include a conference control module, which is connected with the first accessing module, the second accessing module, the mixing module, and the media switching module to control such modules.

In this embodiment, the mixing module is configured to mix audio streams of all sites, and therefore, each site hears the sound of other sites, and audio interoperability is implemented between sites.

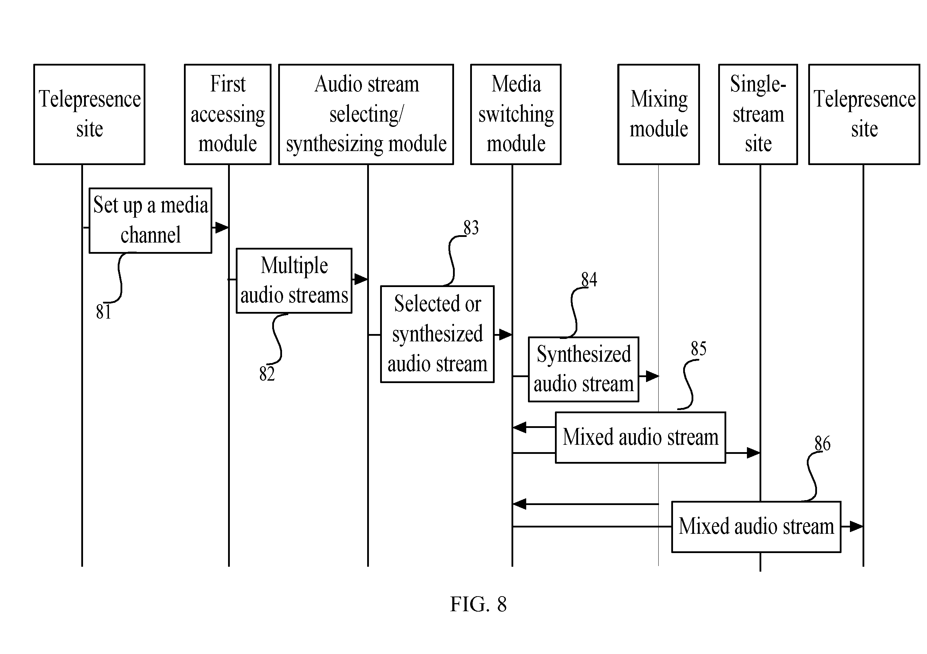

FIG. 8 is a flowchart of an audio processing method provided in the fourth embodiment of the present invention. The method includes the following steps:

Step 81: A media channel is set up between the telepresence site and the first accessing module through a call/capability negotiation process.

Step 82: The first accessing module sends multiple audio streams of the telepresence site to the audio stream selecting/synthesizing module. The audio stream selecting/synthesizing module selects an audio stream according to an instruction of the conference control module or according to volume of the audio stream; or, the audio stream selecting/synthesizing module synthesizes multiple audio streams into one audio stream that includes multi-channel voice information. It is configurable whether to select a stream or to synthesize multiple streams into one stream.

Step 83: The audio stream selecting/synthesizing module sends the selected/synthesized audio stream to the media switching module.

Step 84: The media switching module sends the synthesized audio stream to the mixing module.

Steps 85-86: The mixing module sends the mixed audio stream to the single-stream site through the media switching module and the second accessing module, and to the telepresence site through the media switching module and the first accessing module. FIG. 8 does not show the second accessing module or the first accessing module on the receiving side.

This embodiment centralizes the audio streams of all sites to the mixing module for mixing, and the media switching module distributes the media streams to all sites, and therefore, each site hears the sound of the conference, and audio interoperability is implemented between sites. Meanwhile, in the audio mixing, the mixing module encodes the streams according to different audio protocols to implement audio interoperability between sites of different audio protocols.

The foregoing embodiments deal with the video part and the audio part of the MCU. FIG. 3 and FIG. 6 are specific to the video part, and FIG. 7 is specific to the audio part. Because the MCU needs to process both videos and audios, the MCU works according to FIG. 3 and FIG. 7, or according to FIG. 6 and FIG. 7. That is, the MCU includes a first accessing module, a second accessing module, and a media switching module. The first accessing module is configured to access a first conference terminal to receive first media streams from the first conference terminal, where the first media streams include N video streams and N audio streams. The second accessing module is configured to access a second conference terminal to receive second media streams from the second conference terminal, where the second media streams include L video streams and L audio streams, and L is different from N. The media switching module is configured to transmit all information in the first media streams to the second conference terminal, and transmit all information in the second media streams to the first conference terminal.

More specifically, assuming that N is greater than L, the MCU includes the first accessing module, the second accessing module, the media switching module, video synthesizing module, audio stream selecting/synthesizing module, and a mixing module. The video synthesizing module is connected with the first accessing module, and is configured to synthesize N video streams into L video streams, and forward the L video streams to the second conference terminal through the media switching module. The media switching module is further configured to combine multiple L video streams into N video streams, and forward them to the first conference terminal. The audio stream selecting/synthesizing module is connected with the first accessing module and/or the second accessing module, and is configured to: synthesize N audio streams into one audio stream or select one audio stream among N audio streams according to the volume to obtain one first audio stream in the case that N is greater than 1; or, synthesize L audio streams into one audio stream or select one audio stream among L audio streams according to the volume to obtain one second audio stream in the case that L is greater than 1. The mixing module is configured to mix the one first audio stream obtained by the audio stream selecting/synthesizing module or one audio stream received by the first accessing module with the one second audio stream obtained by the audio stream selecting/synthesizing module or an audio stream received by the second accessing module, and send the mixed audio streams to the first conference terminal and the second conference terminal through a media switching module. The video synthesizing module is configured to synthesize several pieces of N-channel video information into L-channel video information, for example, synthesize L pieces of N-channel video information into L-channel video information, each piece of N-channel video information being synthesized into one-channel video information; or configured to synthesize one piece of N-channel video information into L-channel video information, for example, keep (L-1)-channel video information in the N-channel video information unchanged, and synthesize [N-(L-1)]-channel video information into one-channel video information.

Alternatively, the MCU includes the first accessing module, the second accessing module, the media switching module, the audio stream selecting/synthesizing module, and the mixing module. The media switching module is configured to select L video streams among N video streams on a time-sharing basis to obtain several L video streams, and transmit the several L video streams to the second conference terminal on a time-sharing basis. The audio stream selecting/synthesizing module is connected with the first accessing module and/or the second accessing module, and is configured to: synthesize N audio streams into one audio stream or select one audio stream among N audio streams according to the volume to obtain one first audio stream in the case that N is greater than 1; or, synthesize L audio streams into one audio stream or select one audio stream among L audio streams according to the volume to obtain one second audio stream in the case that L is greater than 1. The mixing module is configured to mix the one first audio stream obtained by the audio stream selecting/synthesizing module or one audio stream received by the first accessing module with the one second audio stream obtained by the audio stream selecting/synthesizing module or an audio stream received by the second accessing module, and send the mixed audio streams to the first conference terminal and the second conference terminal through a media switching module. The media switching module is configured to select specified L video streams among N video streams according to preset control rules; or the media switching module is configured to select L video streams among N video streams according to preset priority; or the media switching module is configured to select L video streams according to the volume of an audio stream corresponding to each video stream; or the media switching module is configured to select L video streams according to the priority carried in each video stream.

Alternatively, the MCU further includes a protocol converting/rate adapting module, which is connected with the first accessing module and the second accessing module, and is configured to perform protocol conversion or rate adaptation for N video streams and L video streams.

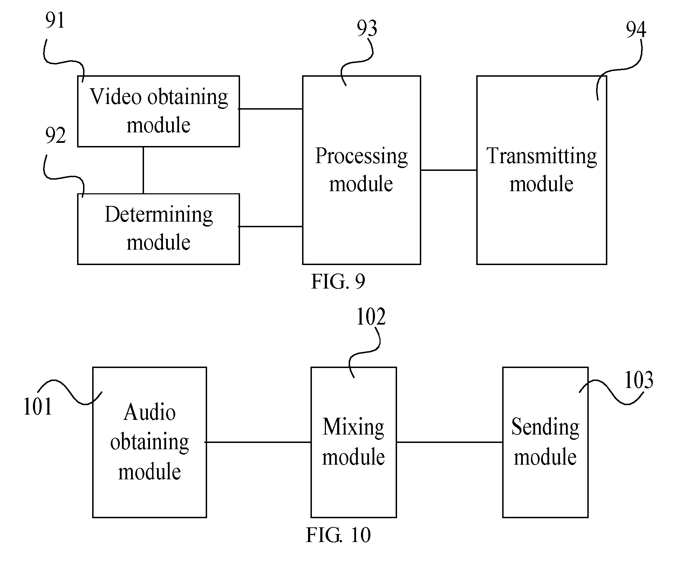

FIG. 9 shows a structure of a video processing apparatus in an embodiment of the present invention. The apparatus includes a video obtaining module 91, a determining module 92, a processing module 93, and a transmitting module 94. The video obtaining module 91 is configured to obtain N video streams sent by the first conference terminal on N channels. The determining module 92 is configured to determine a second conference terminal that interacts with the first conference terminal accessed by the video obtaining module 91, where the second conference terminal supports L video streams, and L is different from N. The processing module 93 is configured to add N-channel video information carried in the N video streams obtained by the video obtaining module 91 to L video streams supported by the second conference terminal determined by the determining module 92. The transmitting module 94 is configured to transmit the L video streams obtained by the processing module 93 to the second conference terminal.

If N is greater than L, the processing module is configured to synthesize the N-channel video information into L-channel video information, and add the L-channel video information to L video streams separately.

If N is less than L, the processing module is configured to synthesize multiple pieces of N-channel video information into L-channel video information, and add the L-channel video information to L video streams separately.

IfN is greater than L, the processing module is further configured to select L video streams among N video streams on a time-sharing basis to obtain several time-shared L video streams; where the transmitting of the L video streams to the second conference terminal may be: transmitting several L video streams to the second conference terminal on a time-sharing basis.

This embodiment may further include a protocol converting/rate adapting module, which is configured to perform protocol conversion and/or rate adaptation for N video streams and L video streams.

In this embodiment, the video streams are synthesized, combined or selected properly to implement video interoperability between conference terminals that transmit different numbers of video streams.

FIG. 10 shows a structure of an audio processing apparatus in an embodiment of the present invention. The apparatus includes an audio obtaining module 101, a mixing module 102, and a sending module 103. The audio obtaining module 101 is configured to obtain audio streams of various conference terminals, where the conference terminals include at least a terminal of a telepresence site and a terminal that supports a different number of audio streams from the telepresence site. The mixing module 102 is configured to mix the audio streams of the conference terminals, where the audio streams are obtained by the audio obtaining module 101. The sending module 103 is configured to send the audio streams mixed by the mixing module 102 to the conference terminals.

This embodiment may further include an audio synthesizing/selecting module, which is connected with the audio obtaining module and is configured to: synthesize the audio streams of all conference terminals into one audio stream or select one audio stream according to the volume, and send the synthesized or selected one audio stream to the mixing module.

Through audio mixing in this embodiment, audio interoperability is implemented between the sites that transmit different numbers of streams.

Persons of ordinary skill in the art should understand that all or a part of the steps of the method according to the embodiments of the present invention may be implemented by a program instructing relevant hardware. The program may be stored in a computer readable storage medium. When the program runs, the steps of the method according to the embodiments of the present invention are performed. The storage medium may be any medium that is capable of storing program codes, such as a Read Only Memory (ROM), a Random Access Memory (RAM), a magnetic disk, or a Compact Disk-Read Only Memory (CD-ROM).

Finally, it should be noted that the above embodiments are merely provided for describing the technical solutions of the present invention, but not intended to limit the present invention. It is apparent that persons skilled in the art can make various modifications and variations to the invention without departing from the spirit and scope of the invention. The present invention is intended to cover the modifications and variations provided that they fall within the scope of protection defined by the following claims or their equivalents.

## Claims

1. A video processing method, comprising:
obtaining N video streams sent by a first conference terminal on N channels, wherein each first conference terminal supports N video streams;
determining a second conference terminal that interacts with the first conference terminal, wherein the second conference terminal supports L video streams, and L is different from N;
adding N-channel video information carried in the N video streams to L video streams; and
transmitting the L video streams to the second conference terminal.

2. The video processing method according to claim 1, wherein:
the step of adding the N-channel video information carried in the N video streams to the L video streams comprises:
if N is greater than L, synthesizing the N-channel video information into L-channel video information, and adding the L-channel video information to the L video streams separately;
or,
if N is less than L, synthesizing multiple pieces of the N-channel video information into L-channel video information, and adding the L-channel video information to the L video streams separately;
or,
if N is greater than L, selecting L video streams among the N video streams on a time-sharing basis to obtain several time-shared L video streams;
the transmitting of the L video streams to the second conference terminal comprises:
transmitting the several L video streams to the second conference terminal on a time-sharing basis.

3. The video processing method according to claim 2, wherein the step of synthesizing the N-channel video information into the L-channel video information comprises:
synthesizing more than two pieces of the N-channel video information into L-channel video information if the N-channel video information is more than two pieces of N-channel video information; or
synthesizing one piece of the N-channel video information into L-channel video information if the N-channel video information is one piece of N-channel video information.

4. The video processing method according to claim 3, wherein:
the step of synthesizing more than two pieces of the N-channel video information into L-channel video information comprises: synthesizing L pieces of the N-channel video information into L-channel video information, and synthesizing each piece of the N-channel video information into one-channel video information; or
the step of synthesizing one piece of the N-channel video information into L-channel video information comprises: keeping (L-1)-channel video information in the N-channel video information unchanged, and synthesizing [N-(L-1)]-channel video information into one-channel video information.

5. The video processing method according to claim 2, wherein the step of selecting the L video streams among the N video streams comprises:
selecting the specified L video streams among the N video streams according to preset control rules; or
selecting the L video streams among the N video streams according to a preset priority; or
selecting the L video streams according to volume of an audio stream corresponding to each video stream; or
selecting the L video streams according to a priority carried in each video stream.

6. The video processing method according to claim 1, further comprising:
performing protocol conversion and/or rate adaptation for the N video streams and the L video streams.

7. An audio processing method, comprising:
obtaining audio streams of various conference terminals, wherein the conference terminals comprise at least a terminal of a telepresence site and a terminal that supports a different number of audio streams from the telepresence site;
mixing the audio streams of the conference terminals; and
sending the mixed audio streams to the conference terminals.

8. The audio processing method according to claim 7, wherein:
the step of mixing the audio streams of the conference terminals comprises:
synthesizing the audio streams of all conference terminals except single-stream conference terminals into one audio stream, or selecting one audio stream among the audio streams of all conference terminals except single-stream conference terminals according to volume, and mixing the audio streams.

9. A video processing apparatus, comprising:
a video obtaining module, configured to obtain N video streams sent by a first conference terminal on N channels, wherein each first conference terminal supports N video streams;
a determining module, configured to determine a second conference terminal that interacts with the first conference terminal, wherein the second conference terminal supports L video streams, and L is different from N;
a processing module, configured to add N-channel video information carried in the N video streams to the L video streams; and
a transmitting module, configured to transmit the L video streams to the second conference terminal.

10. The video processing apparatus according to claim 9, wherein:
if N is greater than L, the processing module is configured to synthesize the N-channel video information into L-channel video information, and add the L-channel video information to the L video streams separately.
or,
if N is less than L, the processing module is configured to synthesize multiple pieces of the N-channel video information into L-channel video information, and add the L-channel video information to the L video streams separately;
or,
if N is greater than L, the processing module is configured to select the L video streams among the N video streams on a time-sharing basis to obtain several time-shared L video streams;
the transmitting of the L video streams to the second conference terminal comprises:
transmitting the several L video streams to the second conference terminal on a time-sharing basis.

11. The video processing apparatus according to claim 10, wherein:
the processing module is further configured to synthesize several pieces of the N-channel video information into L-channel video information; or
the processing module is further configured to synthesize one piece of the N-channel video information into L-channel video information.

12. The video processing apparatus according to claim 11, wherein:
the processing module is further configured to synthesize L pieces of the N-channel video information into L-channel video information, wherein each piece of the N-channel video information is synthesized into one-channel video information; or
the processing module is further configured to keep (L-1)-channel video information in the N-channel video information unchanged, and synthesize [N-(L-1)]-channel video information into one-channel video information.

13. The video processing apparatus according to claim 10, wherein:
the processing module is configured to select the specified L video streams among the N video streams according to preset control rules; or
the processing module is configured to select the L video streams among the N video streams according to a preset priority; or
the processing module is configured to select the L video streams according to volume of an audio stream corresponding to each video stream; or
the processing module is configured to select the L video streams according to a priority carried in each video stream.

14. The video processing apparatus according to claim 9, further comprising:
a protocol converting/rate adapting module, configured to perform protocol conversion and/or rate adaptation for the N video streams and the L video streams.

15. An audio processing apparatus, comprising:
an audio obtaining module, configured to obtain audio streams of various conference terminals, wherein the conference terminals comprise at least a terminal of a telepresence site and a terminal that supports a different number of audio streams from the telepresence site;
a mixing module, configured to mix the audio streams of the conference terminals; and
a sending module, configured to send the mixed audio streams to the conference terminals.

16. The audio processing apparatus according to claim 15, further comprising:
an audio synthesizing/selecting module, connected with the audio obtaining module and configured to: synthesize the audio streams of the conference terminals into one audio stream or select one audio stream according to volume, and send the synthesized or selected one audio stream to the mixing module.

17. A Multipoint Control Unit (MCU), comprising:
a first accessing module, configured to access a first conference terminal to receive first media streams from a first conference terminal, wherein the first media streams comprise N video streams and N audio streams;
a second accessing module, configured to access a second conference terminal to receive second media streams from the second conference terminal, wherein the second media streams comprise L video streams and L audio streams, and L is different from N; and
a media switching module, configured to transmit all information in the first media streams to the second conference terminal, and transmit all information in the second media streams to the first conference terminal.

18. The MCU according to claim 17, wherein:
if N is greater than L, the MCU further comprises:
a video synthesizing module, connected with the first accessing module, and configured to synthesize N video streams into L video streams;
the media switching module is specifically configured to forward the synthesized L video streams to the second conference terminal; and further configured to combine multiple L video streams into N video streams, and forward them to the first conference terminal.

19. The MCU according to claim 18, wherein:
the video synthesizing module is specifically configured to synthesize several pieces of N-channel video information into L-channel video information; or
synthesize one piece of the N-channel video information into L-channel video information.

20. The MCU according to claim 19, wherein:
the video synthesizing module is further configured to synthesize L pieces of the N-channel video information into L-channel video information, wherein each piece of the N-channel video information is synthesized into one-channel video information; or further configured to keep (L-1)-channel video information in the N-channel video information unchanged, and synthesize [N-(L-1)]-channel video information into one-channel video information.

21. The MCU according to claim 17, wherein:
if N is greater than L, the media switching module is further configured to select L video streams among the N video streams on a time-sharing basis to obtain several L video streams, and transmit the several L video streams to the second conference terminal on a time-sharing basis.

22. The MCU according to claim 21, wherein:
the media switching module is configured to select the specified L video streams among the N video streams according to preset control rules; or
the media switching module is configured to select the L video streams among the N video streams according to a preset priority; or
the media switching module is configured to select the L video streams according to volume of an audio stream corresponding to each video stream; or
the media switching module is configured to select the L video streams according to a priority carried in each video stream.

23. The MCU according to claim 17, wherein if N is greater than L, the MCU further comprises:
an audio stream selecting/synthesizing module, connected with the first accessing module and/or the second accessing module, and configured to: synthesize the N audio streams into one audio stream or select one audio stream among the N audio streams according to volume to obtain one first audio stream ifN is greater than 1; or, synthesize the L audio streams into one audio stream or select one audio stream among the L audio streams according to the volume to obtain one second audio stream if L is greater than 1; and
a mixing module, configured to mix the one first audio stream obtained by the audio stream selecting/synthesizing module or an audio stream received by the first accessing module with the one second audio stream obtained by the audio stream selecting/synthesizing module or an audio stream received by the second accessing module, and send the mixed audio streams to the first conference terminal and the second conference terminal through the media switching module;
or,
an audio stream selecting/synthesizing module, connected with the first accessing module and the second accessing module, and configured to: synthesize the N audio streams into one audio stream or select one audio stream among the N audio streams according to volume to obtain one first audio stream; or, synthesize the L audio streams into one audio stream or select one audio stream among the L audio streams according to the volume to obtain one second audio stream; and
a mixing module, configured to mix the first audio stream with the second audio stream, send the mixed audio streams to the first conference terminal and the second conference terminal through the media switching module.

24. The MCU according to any of claims 17-23, further comprising:
a protocol converting/rate adapting module, connected with the first accessing module and the second accessing module, and configured to perform protocol conversion or rate adaptation for the N video streams and the L video streams.

25. A videoconference system, comprising:
at least two conference terminals, which support at least two different numbers of media streams; and
a Multipoint Control Unit (MCU), configured to switch all information carried in the media streams of the at least two conference terminals.

26. The videoconference system according to claim 25, wherein:
the MCU is an MCU specified in any of claims 17-24.
